# EUROPÄISCHE PATENTSCHRIFT

(11) **EP 0 987 481 B1**
(45) Veröffentlichungstag und Bekanntmachung des Hinweises auf die Patenterteilung: **05.09.2001**
(21) Anmeldenummer: 99116300.7
(22) Anmeldetag: 18.08.1999
(51) Int. Cl.: F16L 5/08

(54) **Pressringdichtung**
Press-ring seal
Joint d'étanchéité à bague de compression

(30) Priorität: 14.09.1998 DE 29816473 U; 14.09.1998 DE 29816457 U; 23.09.1998 DE 29817098 U
(43) Veröffentlichungstag der Anmeldung: 22.03.2000
(73) Patentinhaber: Kröner GmbH Armaturen und Dichtungstechnik, 73269 Hochdorf/Ploch. (DE)
(72) Erfinder: Kröner, Alfred, 73269 Hochdorf (DE)
(74) Vertreter: König, Beate, Dipl.-Phys. Dr.

(56) Entgegenhaltungen:
- DE-A- 3 240 339
- DE-U- 9 102 824
- DE-U- 9 318 092
- DE-U- 29 713 957
- DE-U- 29 713 971
- DE-U- 29 723 073

## Beschreibung

Die Erfindung betrifft eine Preßringdichtung, insbesondere für eine Mauerdurchführung, umfassend je eine Bohrungen aufweisende Außen- und Innenscheibe, eine zwischen den Scheiben angeordnete Scheibe aus elastisch verformbarem Material, die Bohrungen derselben Anzahl aufweist, sowie Schraubbolzen, die durch die Bohrungen gesteckt sind und die Außen- und Innenscheibe gegeneinander drücken.

Derartige Preßringdichtungen, wie sie beispielsweise aus der DE 83 16 672 U bekannt sind, werden üblicherweise in Mauerdurchführungen zwischen einem Installationsrohr und dem Mauerwerk oder einem Mauerschutzrohr eingesetzt, um eine ausreichende Dichtung zwischen dem Installationsrohr und der Mauer bzw. dem Mauerschutzrohr zu gewährleisten. Durch den beidseits mittels der Scheiben ausgeübten Druck ergibt sich ein fester Sitz des Dichtrings. Bei den bekannten Preßringdichten werden üblicherweise Schraubbolzen mit Kopf eingesetzt, die am anderen Ende mittels Muttern verspannt werden. Nachteilig ist, daß infolge der Gegenmutter eine Nachstellung der Schraubbolzen nicht möglich oder jedenfalls erschwert ist.

Aus der DE 297 23 073 U ist eine Dichtungsvorrichtung bekannt, die aus zwei hintereinander angeordneten verformbaren Dichtkörpern mit jeweils einer Trennfuge besteht, wobei die Trennfugen im montierten Zustand versetzt zueinander angeordnet sind. Zum Verspannen der Dichtkörper sind zwei Spannplatten vorgesehen und durch Spannbolzen miteinander verbunden. Spannbolzen sind durch die eine Spannplatte sowie die Dichtkörper durchgeführt und mittels eines Außengewindes mit der Spannplatte verschraubt, die mehrere gewindeversehene Bohrungen aufweist. Durch Verspannen der beiden Spannplatten können die Dichtkörper axial komprimiert und dadurch abdichtend an die durchzuführende Leitung und die Innenwandung eines Durchbruchs angepreßt werden.

Der Erfindung liegt die Aufgabe zugrunde, eine Preßringdichtung zu schaffen, die auf einfache Weise handhabbar ist.

Diese Aufgabe ist erfindungsgemäß bei einer Preßringdichtung mit den Merkmalen des Anspruchs 1 gelöst. Vorteilhafte Weiterbildungen der erfindungsgemäßen Preßringdichtung sind Gegenstand der Unteransprüche.

Eine erfindungsgemäße Preßringdichtung, insbesondere für eine Mauerdurchführung, umfaßt somit je eine Bohrungen aufweisende Außen- und Innenscheibe. Zwischen den Scheiben ist eine Scheibe aus elastisch verformbarem Material angeordnet, die Bohrungen derselben Anzahl aufweist. Durch die Bohrungen sind Schraubbolzen gesteckt, die die Außen- und Innenscheibe gegeneinander drücken. Die Scheibe aus elastischem Material besteht aus Sektorabschnitten.

Bei der erfindungsgemäßen Preßringdichtung weisen die Außen- und Innenscheibe sowie die Scheibe (10) aus elastisch verformbarem Material eine oder mehrere Durchführöffnungen auf. So können die Scheiben und der Ring, statt lediglich die Durchführung eines Installationsrohrs oder dergleichen zu ermöglichen, auch mehrere Durchführöffnung aufweisen.

Vorzugsweise besteht die Scheibe aus elastisch verformbarem Material aus mehreren Lagen von Sektorabschnitten, wobei die Sektorabschnitte der übereinanderliegenden Lagen jeweils versetzt zu denen der benachbarten Lage(n) angeordnet sind. Diese Ausführung wird gegen drückendes Wasser verwendet.

Durch die erfindungsgemäße abschnittesweise Ausgestaltung der Scheibe aus elastisch verformbarem Material können auch Preßringdichtungen mit größeren Durchmessern, beispielsweise im Durchmesserbereich von 300 bis > 1200 (z.B. 1500) mm, leicht transportiert werden. Es lassen sich Form und Abmessungen der Abschnitte bedarfsweise auslegen und individuell gestalten. Beispielsweise können die Abschnitte mit einem Hochdruck-Wasserstrahl hochgenau geschnitten werden. Die Anzahl und Größe der Sektorabschnitte bestimmt sich nach dem Umfang der Produktrohre und nach dem Innendurchmesser der Durchführöffnungen.

Diese Preßringdichtung kann für alle Rohrarten unabhängig von deren Oberfläche eingesetzt werden und ermöglicht eine dauerhafte Abdichtung beispielsweise bei Trinkwasserbehältern, Mauerdurchführungen, in Kläranlagen, Abwasser-Hebeanlagen, Müllverbrennungsanlagen, Schächten in Abwasserkanälen, im Hoch- und Tiefbau, für Pipelines und Tanklager, Gebäudeeinführungen im Grundwasserbereich, etc. Durch das Anziehen der Schraubbolzen werden die zwischen der Außen- und Innenscheibe befindlichen elastischen Sektorabschnitte so verpreßt, daß sie infolge der Verformung gleichmäßig gegen das Schutzrohr oder die Kernbohröffnung und das durchgeführte Produktrohr gedrückt werden.

Als Material für die elastische Scheibe bzw. den Ring eignen sich insbesondere Elastomere wie Naturkautschuk, Styrol-Butadien-Kautschuk, Ethylen-Propylen-Terpolymer, Nitrilkautschuk, Butylkautschuk, Polyurethan als Formgummi oder aus Platten ausgeschnitten. Aufgrund der hohen Reißfestigkeit und Reißdehnung sowie Rückprallelastizität dieser Werkstoffe kann eine hohe Gas- und Druckwasserbständigkeit sichergestellt werden.

Vorzugsweise sind die Scheiben aus hochkorrosionsfestem Material wie Edelstahl, A2- oder A4-Stahl hergestellt, je nach Größe bzw. Durchmesser in unterschiedlicher Stärke.

Die Innenscheibe ist mit Gewinde für einen Schraubeingriff mit den Schraubbolzen versehen. Durch die Gewindeausstattung der Innenscheibe ist es möglich, auf separate Gegenmuttern zu verzichten. Dies bringt zum einen den Vorteil von weniger Teilen mit sich und zum anderen kann der Sitz der Schraubbolzen auf einfache Weise von der zugänglichen Außenseite her nachgespannt werden. So ergibt sich eine von der Bedienung her sehr einfache Nachstellbarkeit der erfindungsgemäßen Preßringdichtung.

Die Gewindeausstattung der Innenscheibe kann vorteilhaft dadurch vorgesehen sein, daß die Innenscheibe selbst Bohrungen mit Innengewinde hat. Ist dies weniger bevorzugt, so kann die Innenscheibe beispielsweise angeschweißte Muttern aufweisen oder mit anderen, ein Innengewinde aufweisenden Teilen versehen sein.

Bei aufklappbarer bzw. geteilter Ausführung der erfindungsgemäßen Preßringdichtung sind bei dieser die Scheiben zweiteilig und der Ring ist einteilig aufgeschnitten. Dies ermöglicht eine nachträgliche Montage der Preßringdichtung. Umfaßt der Ring zwei oder mehr Lagen von Sektorabschnitten, so befindet sich die Schnittlinie immer zwischen zwei Abschnitten der einen Lage und durchschneidet in der Regel mittig die Abschnitte der darüber befindlichen Lage.

Zur Gewährleistung einer sicheren Abdichtung sind vorzugsweise mindestens drei Schraubbolzen, beispielsweise auch vier und fünf Schraubbolzen, vorgesehen.

Insbesondere bei kleineren Ausführungen der erfindungsgemäßen Preßringdichtung ist die Außenscheibe flanschartig erweitert, wodurch sich eine Ausziehsicherung ergibt.

Bei einer vorteilhaften Variante der erfindungsgemäßen Preßringdichtung ist diese als Doppeldichtung mit zwei Scheiben aus elastisch verformbarem Material und einer dazwischen befindlichen Zwischenscheibe ausgeführt, wodurch sich eine noch zuverlässigere Dichtwirkung ergibt.

Weiter kann eine weitere Preßringdichtung in einem vorgesehenen Abstand von einer ersten Preßringdichtung mittels Distanzelementen fixiert sein. Mit dieser Ausführung kann beispielsweise eine Montage bei Hauseinführungen bei bereits in ein Schutzrohr eingeschobenem Versorgungsrohr erfolgen, und der Abstand der beiden Preßringdichtungen wird entsprechend der Mauerstärke festgelegt. Bei den Distanzelementen kann es sich um Distanzrohre, etwa Gewindestangen, handeln, die mit Hülsen versehen sein können. So werden z.B. die Gewindestangen bedarfweise gekürzt. Die Hülsen ermöglichen ein sicherereres Verspannen der Preßringdichtungen unter Druck. Durch den Gewindeeingriff können die beiden Preßringdichtungen vom Gebäudeinneren aus verspannt werden.

Die Erfindung wird im folgenden weiter anhand von Ausführungsbeispielen und der Zeichnung beschrieben. Diese Darstellungen, ebenso wie auch die Zusammenfassung von Merkmalen in den Unteransprüchen, sollen die Erfindung keinesfalls einschränken. In der Zeichnung zeigen:
- Fig. 1: eine perspektivische Teilschnittansicht eines ersten Ausführungsbeispiels einer erfindungsgemäßen Preßringdichtung mit exemplarischer Darstellung eines Schraubbolzens,
- Fig. 2: eine perspektivische Ansicht der Preßringdichtung von Fig. 1,
- Fig. 3: a) bis d) Beispiele von Sektorabschnitten mit Zentriwinkel von 22,5°,
- Fig. 4: einen zentralen Axialschnitt durch eine Preßringdichtung gemäß einem zweiten Ausführungsbeispiel der Erfindung,
- Fig. 5: eine Draufsicht der Preßringdichtung von Fig. 4,
- Fig. 6: einen zentralen Axialschnitt durch eine Preßringdichtung gemäß einem dritten Ausführungsbeispiel der Erfindung mit drei Durchführöffnungen,
- Fig. 7: eine Draufsicht der Preßringdichtung von Fig. 6,
- Fig. 8: einen zentralen Axia.lschnitt durch eine als Blinddichtung ausgeführte Preßringdichtung gemäß einem vierten Ausführungsbeispiel der Erfindung,
- Fig. 9: eine Draufsicht der Preßringdichtung von Fig. 8,
- Fig. 10: einen zentralen Axialschnitt durch eine Preßringdichtung gemäß einem fünften Ausführungsbeispiel der Erfindung mit zwei elastischen Scheiben und Zwischenscheibe,
- Fig. 11: eine Draufsicht der Preßringdichtung von Fig. 10,
- Fig. 12: einen zentralen Axialschnitt durch eine Preßringdichtung gemäß einem sechsten Ausführungsbeispiel der Erfindung mit flanschartig erweiterter Außenscheibe,
- Fig. 13: eine Draufsicht der Preßringdichtung von Fig. 12,
- Fig. 14: einen zentralen Axialschnitt durch eine Preßringdichtungsanordnung gemäß einem siebten Ausführungsbeispiel der Erfindung zwei Preßringdichtungen und hülsenversehenen Distanzrohren und
- Fig. 15: eine Draufsicht der Preßringdichtung von Fig. 14.

Eine erfindungsgemäße Preßringdichtung umfaßt eine Außenscheibe 2 und eine Innenscheibe 4 (Flansche), die beide aus Edelstahl sind und eine Anzahl von gleichmäßig beabstandeten Bohrungen 6 und 8 aufweisen. Innen weisen die Außen- und Innenscheibe und der Ring eine zentrale Durchführungsöffnung 22 für ein Installationsrohr oder dergleichen auf. Zwischen der Außen- und Innenscheibe 2, 4 befindet sich ein Ring bzw. eine Scheibe 10 aus elastisch verformbarem Material, beispielsweise Gummi. Der Ring 10 hat dieselbe Anzahl von Bohrungen 12. Schraub- oder Gewindebolzen oder wie veranschaulicht Flachrundschrauben 18 mit Vierkantansatz, Unterlegscheiben 17 und Sechskantmuttern 19, von denen eine separat dargestellt ist, erstrecken sich durch die Bohrungen 6, 12 und 8. Soll die Preßringdichtung fest montiert werden, ist es lediglich erforderlich, diese fest anzuziehen, wobei der fest vorgesehene Gewindeeintritt mit dem Innengewinde 8 ein stärkeres Festspannen mit Auswölbung des Rings 10 bewirkt.

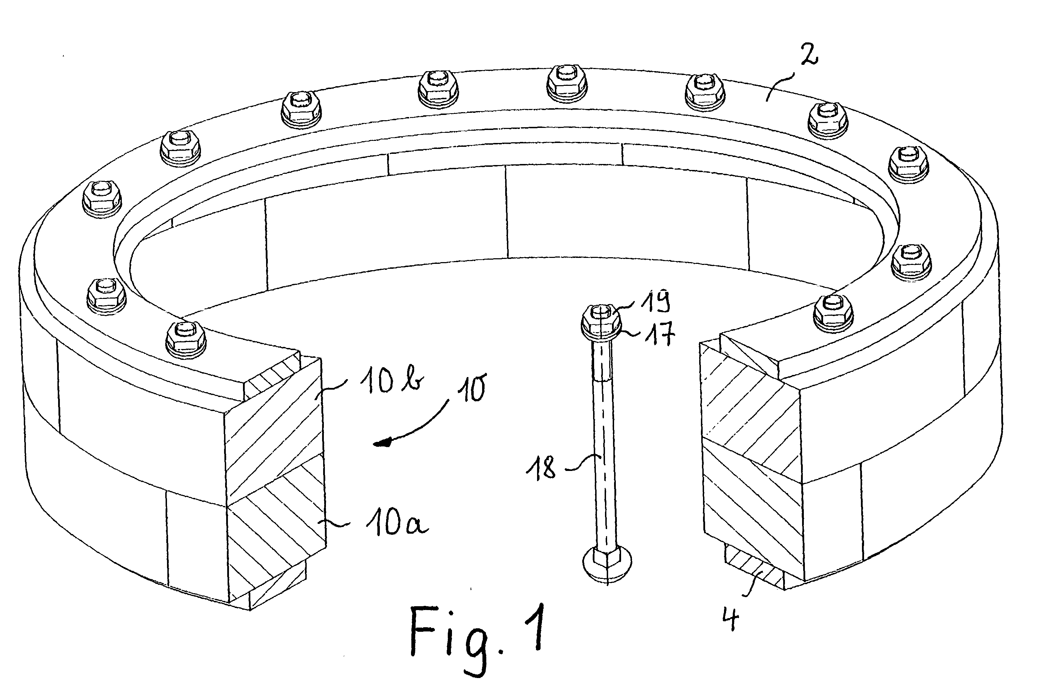

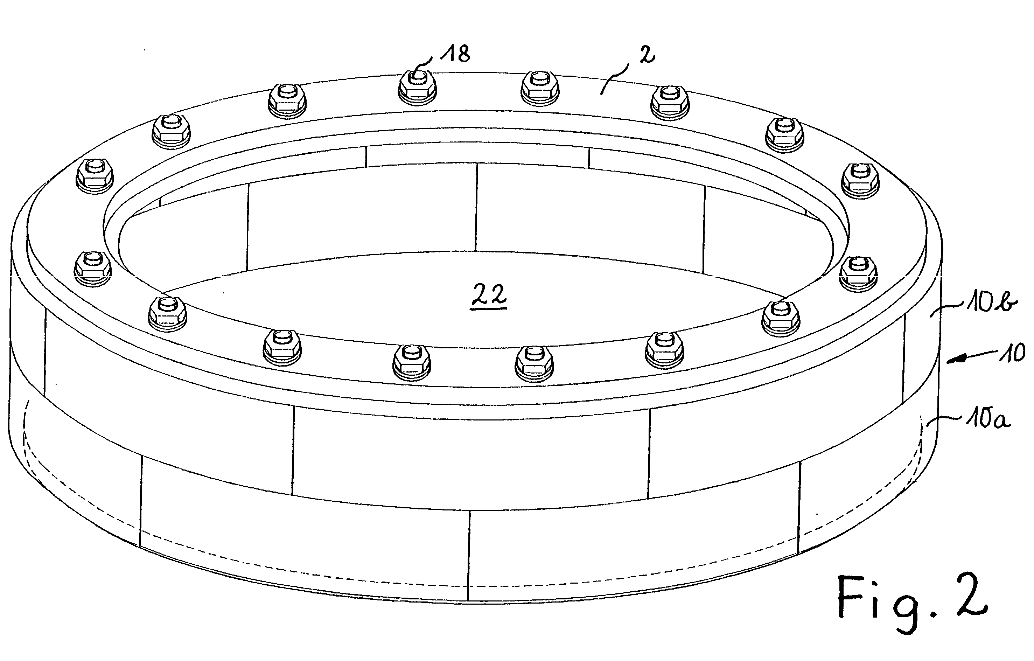

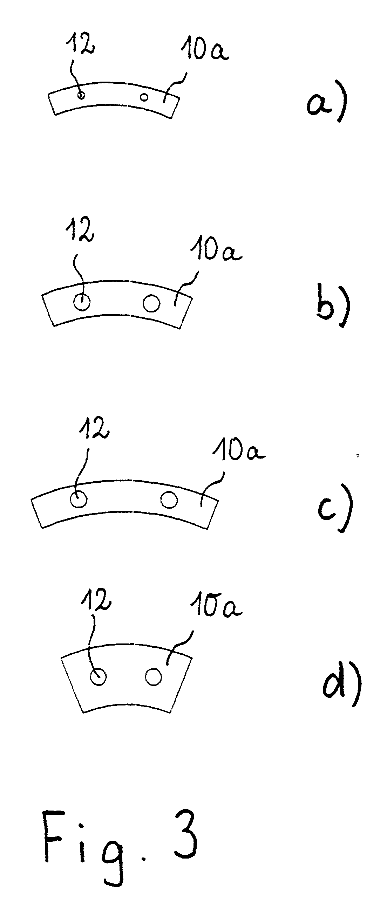

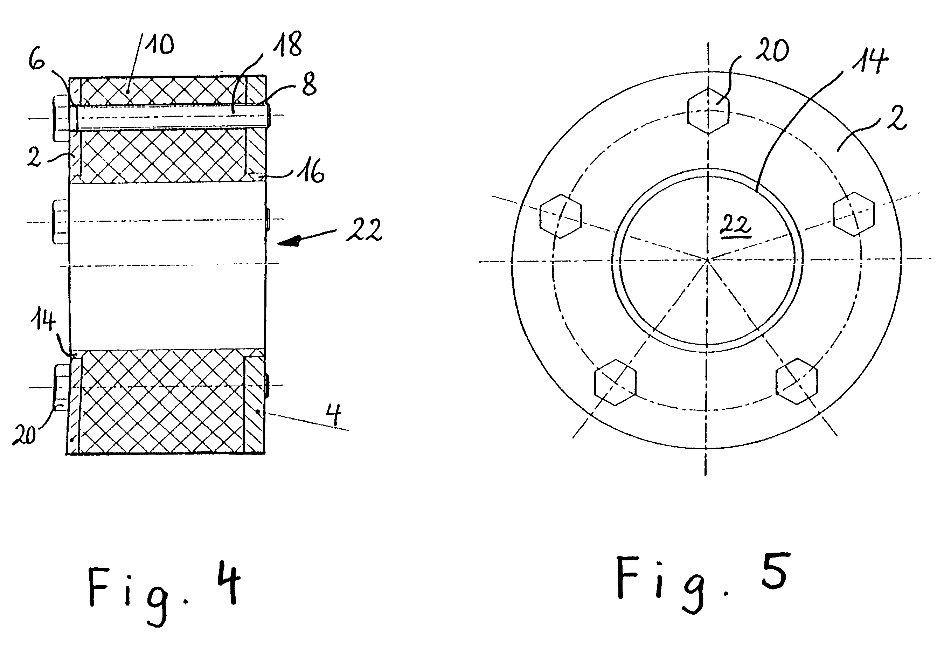

Wie das in Fig. 1 und 2 deutlich veranschaulichte erste Ausführungsbeispiel zeigt, besteht der Ring 10 aus zwei Lagen von Sektorabschnitten 10a, 10b. Die Sektorabschnitte 10a der unteren Lage sind dabei gegenüber den Sektorabschnitten 10b der oberen Lage versetzt angeordnet. Bei diesem Ausführungsbeispiel sind die Sektorabschnitte aus Platten mittels eines Hochdruck-Wasserstrahls in den gewünschten Abmessungen (mit jeweils Zentriwinkeln von 45°) ausgeschnitten worden. Fig. 3 zeigt vier weitere Beispiele von Sektorabschnitten mit Zentriwinkeln von 22,5°.

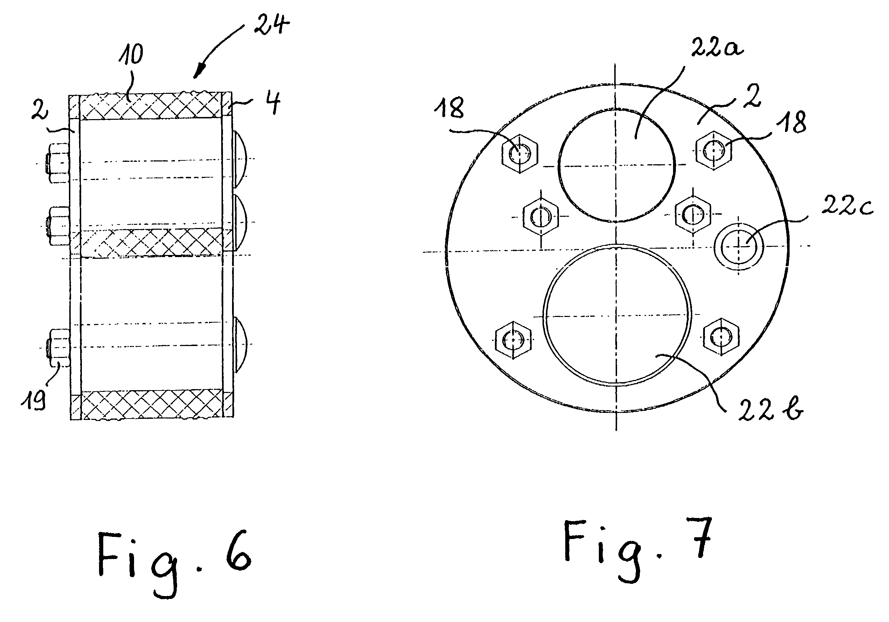

Fig. 4 und 5 zeigen ein zweites Ausführungsbeispiel einer Preßringdichtung mit unterschiedlich ausgeführten Bohrungen der Außen- und Innenscheibe 2, 4. Bei den Bohrungen 6 der Außenscheibe 2 handelt es sich um eine einfache Durchführung. Die Bohrungen 8 des eine größere Dicke aufweisenden Innenflansches 4 weisen ein Innengewinde auf. Am Innenrand weist der Ring 10 auf der Außen- und der Innenseite jeweils einen Ringbund 14, 16 auf. Schraubbolzen 18 mit Kopf 20 erstrecken sich durch die Bohrungen 6, 12 und 8.

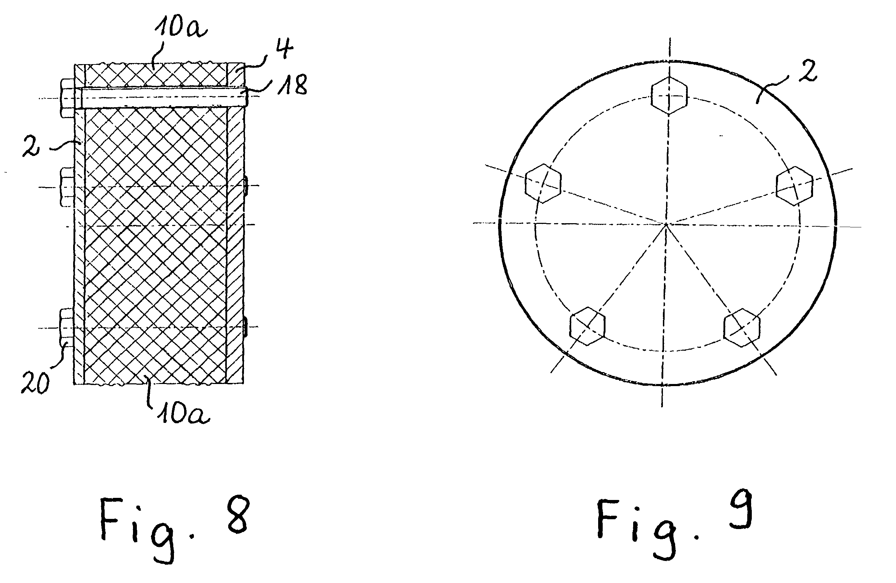

In Fig. 6 und 7 ist ein drittes Ausführungsbeispiel einer Preßringdichtung dargestellt, das drei Durchführöffnungen 22a bis 22c aufweist. Die Durchführöffnungen 22a und 22b sind für Rohre vorgesehen, während die weitaus kleinere Durchführöffnung 22c für Kabel vorgesehen ist. Zur Verbesserung des Haftsitzes weist der Ring 10 auf der Außenseite kleine Rippenreihen 24 auf.

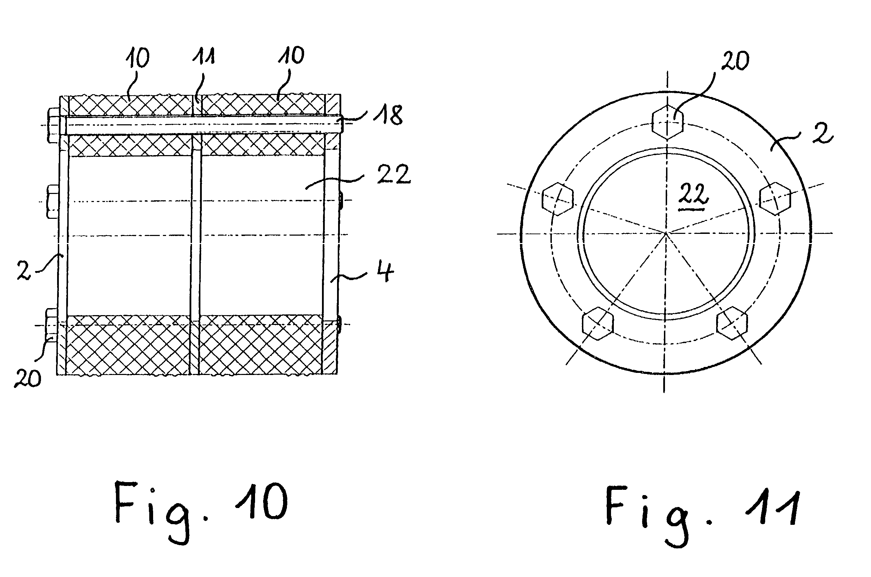

In Fig. 8 und 9 ist ein viertes Ausführungsbeispiel einer Preßringdichtung gezeigt, die als Blinddichtung ausgeführt ist. Derartige Dichtungen dienen zu vorübergehendem oder ständigem Verschließen nicht gebrauchter Futterrohre oder Kernlochbohrungen.

Eine in Fig. 10 und 11 dargestellte Preßringdichtung gemäß einem fünften Ausführungsbeispiel ist als Doppeldichtung ausgeführt. Sie umfaßt zwei Scheiben 10 aus elastisch deformierbarem Material, zwischen denen eine Zwischenscheibe 11 aus ebenfalls Edelstahl angeordnet ist.

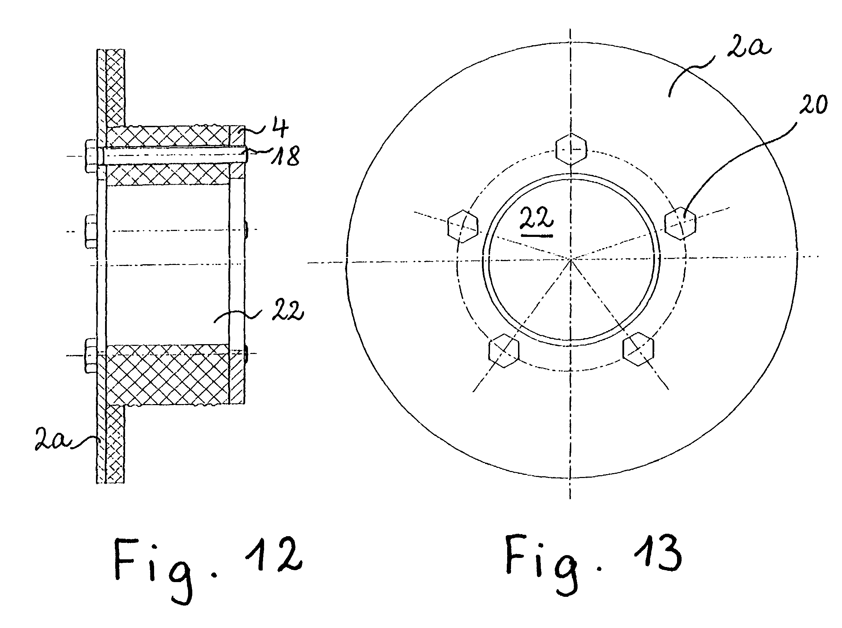

Bei der in Fig. 12 und 13 veranschaulichten Preßringdichtung gemäß einem sechsten Ausführungsbeispiel ist die Außenscheibe 2a flanschartig erweitert, d.h. der vordere Druckring ist größer und kann damit als Ausziehsicherung dienen.

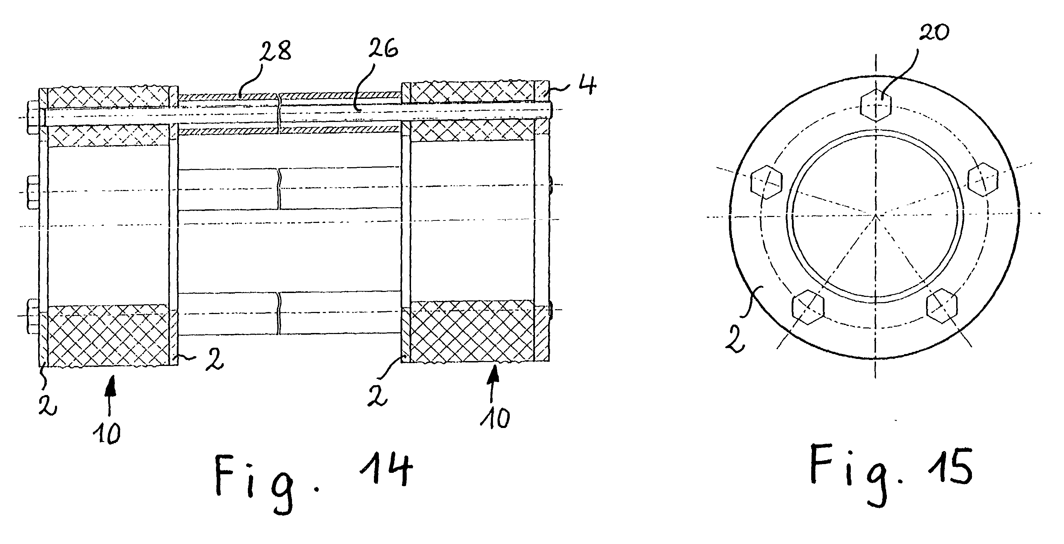

Die in Fig. 14 und 15 gezeigte Preßringdichtungsanordnung gemäß einem sieben Ausführungsbeispiel ist insbesondere für Hauseinführungen vorgesehen, aber in der Anwendung nicht hierauf beschränkt. Es sind zwei Preßringdichtungen vorgesehen, von denen die äußere als Innenscheibe eine Scheibe wie die Außenscheibe 2 aufweist. Die innere Scheibe 4 der inneren Preßringdichtung ist mit Gewinde in den Bohrungen 8 versehen. Als Schraubbolzen dient eine mit Kopf versehene Gewindestange 26, die von einer Hülse 28 umgeben ist. Die Hülsenlänge legt den Abstand der einander zugewandten Scheiben 2 fest. Dieser Aufbau ermöglicht es, von der Hausinnenseite her mit einem Arbeitsgang beide Preßringdichtungen zugleich in der Mauer zu verspannen.

## Patentansprüche

1. Preßringdichtung, insbesondere für eine Mauerdurchführung, umfassend je eine Bohrungen (6, 8) aufweisende Außen- und Innenscheibe (2, 4), eine zwischen den Scheiben angeordnete Scheibe (10) aus elastisch verformbarem Material, die Bohrungen (12) derselben Anzahl aufweist, sowie Schraubbolzen (18), die durch die Bohrungen gesteckt sind und die Außen- und Innenscheibe gegeneinander drücken, **dadurch gekennzeichnet,** daß die Scheibe (10) aus elastischem Material aus Sektorabschnitten (10a, 10b) besteht.

2. Preßringdichtung nach Anspruch 1, **dadurch gekennzeichnet,** daß die Außen- und Innenscheibe (2, 4) sowie die Scheibe (10) aus elastisch verformbarem Material eine oder mehrere Durchführöffnungen (22a, 22b, 22c) aufweisen.

3. Preßringdichtung nach Anspruch 1 oder 2, **dadurch gekennzeichnet,** daß die Scheibe (10) aus elastisch verformbarem Material aus mehreren Lagen von Sektorabschnitten (10a, 10b) besteht, wobei die Sektorabschnitte (10a) der übereinanderliegenden Lagen jeweils versetzt zu denen (10b) der benachbarten Lage(n) angeordnet sind.

4. Preßringdichtung nach einem der Ansprüche 1 bis 3, **dadurch gekennzeichnet**, daß die Innenscheibe (4) mit Gewinde für einen Schraubeingriff mit den Schraubbolzen (18) versehen ist.

5. Preßringdichtung nach Anspruch 4, **dadurch gekennzeichnet,** daß die Innenscheibe (4) Bohrungen (8) mit Innengewinde hat.

6. Preßringdichtung nach Anspruch 5, **dadurch gekennzeichnet,** daß die Innenscheibe angeschweißte Muttern hat.

7. Preßringdichtung nach einem der Ansprüche 1 bis 6, **dadurch gekennzeichnet**, daß die Scheiben und der Ring geteilt ausgeführt sind.

8. Preßringdichtung nach einem der Ansprüche 1 bis 6, **dadurch gekennzeichnet**, daß die Außenscheibe (2a) flanschartig erweitert ist.

9. Preßringdichtung nach einem der Ansprüche 1 bis 8, **dadurch gekennzeichnet**, daß sie als Doppeldichtung mit zwei Scheiben (10) aus elastisch verformbarem Material und einer dazwischen befindlichen Zwischenscheibe (11) ausgeführt ist.

10. Preßringdichtung nach einem der Ansprüche 1 bis 9, **dadurch gekennzeichnet**, daß eine weitere Preßringdichtung in einem vorgesehenen Abstand von der ersteren Preßringdichtung mittels Distanzelementen ((26) fixiert ist.

## Claims

1. Press-ring seal, in particular for a wall through-orifice, comprising a respective outer and inner disc (2, 4) comprising bores (6, 8), a disc (10) disposed between the discs and consisting of elastically deformable material and comprising the same number of bores (12), and screw bolts (18) which are passed through the bores and press the outer and inner discs towards each other, **characterised in that** the disc (10) consists of an elastic material in sector portions (10a, 10b).

2. Press-ring seal according to claim 1, **characterised in that** the outer and inner discs (2, 4) and the disc (10) of elastically deformable material comprise one or a plurality of through-orifices (22a, 22b, 22c).

3. Press-ring seal according to claim 1 or 2, **characterised in that** the disc (10) of elastically deformable material consists of a plurality of layers of sector portions (10a, 10b), wherein the sector portions (10a) of the superimposed layers are disposed respectively offset with respect to those (10b) of the adjacent layer(s).

4. Press-ring seal according to any one of claims 1 to 3, **characterised in that** the inner disc (4) is provided with a thread for a screw engagement with the screw bolts (18).

5. Press-ring seal according to claim 4, **characterised in that** the inner disc (4) has bores (8) with an internal thread.

6. Press-ring seal according to claim 5, **characterised in that** the inner disc has nuts welded on it.

7. Press-ring seal according to any one of claims 1 to 6, **characterised in that** the discs and the ring are formed in a split manner.

8. Press-ring seal according to any one of claims 1 to 6, **characterised in that** the outer disc (2a) is widened in a flange-like manner.

9. Press-ring seal according to any one of claims 1 to 8, **characterised in that** it is formed as a double seal with two discs (10) of elastically deformable material and an intermediate disc (11) located therebetween.

10. Press-ring seal according to any one of claims 1 to 9, **characterised in that** a further press-ring seal is fixed at a specified distance from the first press-ring seal by means of spacing elements (26).

## Revendications

1. Joint d'étanchéité à bague de compression, en particulier pour une traversée de mur, comprenant une plaque extérieure et une plaque intérieure (2, 4) munies de trous (6, 8), une plaque (10) réalisée en un matériau déformable élastiquement et pourvue d'un nombre égal de trous, ainsi que des boulons (18) qui sont enfilés dans les trous et pressent les plaques extérieure et intérieure en direction l'une de l'autre, **caractérisé en ce que** la plaque (10) en matériau élastique est composée de secteurs (10a, 10b).

2. Joint d'étanchéité à bague de compression selon la revendication 1, **caractérisé en ce que** les plaques extérieure et intérieure (2, 4) ainsi que la plaque (10) de matériau déformable élastiquement comportent une ou plusieurs ouvertures de passage (22a, 22b, 22c).

3. Joint d'étanchéité à bague de compression selon la revendication 1 ou 2, **caractérisé en ce que** la plaque (10) de matériau déformable élastiquement est formée de plusieurs couches de secteurs (10a, 10b), les secteurs (10a) dans les couches superposées étant décalés chaque fois par rapport aux secteurs (10b) de la/des couche(s) voisine(s).

4. Joint d'étanchéité à bague de compression selon une des revendications 1 à 3, **caractérisé en ce que** la plaque intérieure (4) est pourvue de filetages pour une liaison vissée avec les boulons (18).

5. Joint d'étanchéité à bague de compression selon la revendication 4, **caractérisé en ce que** la plaque intérieure (4) est pourvue de trous (8) comportant un filetage intérieur.

6. Joint d'étanchéité à bague de compression selon la revendication 5, **caractérisé en ce que** la plaque intérieure porte des écrous soudés.

7. Joint d'étanchéité à bague de compression selon une des revendications 1 à 6, **caractérisé en ce que** les plaques et la bague sont fendues.

8. Joint d'étanchéité à bague de compression selon une des revendications 1 à 6, **caractérisé en ce que** la plaque extérieure (2a) est évasée à la manière d'une bride.

9. Joint d'étanchéité à bague de compression selon une des revendications 1 à 8, **caractérisé en ce qu**'il est conformé en joint double avec deux plaques (10) en matériau déformable élastiquement et une plaque intermédiaire (11) disposée entre deux.

10. Joint d'étanchéité à bague de compression selon une des revendications 1 à 9, **caractérisé en ce qu**'un joint d'étanchéité à bague de compression supplémentaire est fixé à une distance donnée du premier joint d'étanchéité à bague de compression, au moyen d'éléments d'espacement (26).
